# EUROPÄISCHE PATENTSCHRIFT

(11) **EP 2 465 338 B1**
(45) Veröffentlichungstag und Bekanntmachung des Hinweises auf die Patenterteilung: **29.04.2015**
(21) Anmeldenummer: 11401658.7
(22) Anmeldetag: 06.12.2011
(51) Int. Cl.: A01F 25/08, F26B 9/10, F26B 21/00

(54) **Trocknungsvorrichtung**
Dehydration device
Dispositif de séchage

(30) Priorität: 09.12.2010 DE 202010016412 U
(43) Veröffentlichungstag der Anmeldung: 20.06.2012
(73) Patentinhaber: LASCO Heutechnik GmbH, 5221 Lochen (AT)
(72) Erfinder: Landrichinger, Johann, 5221 Lochen (AT)
(74) Vertreter: Heyerhoff Geiger & Partner Patentanwälte

(56) Entgegenhaltungen:
- EP-A1- 0 534 382
- AT-U1- 5 600

## Beschreibung

Die Erfindung betrifft eine Trocknungsvorrichtung nach dem Oberbegriff des Anspruchs 1 und einen Bodendeckel nach dem nebengeordneten Anspruch.

Zur Qualitätssteigerung von landwirtschaftlichem Trocknungsgut, wie Heu, Stroh, Hopfen und dergleichen, und im Extremfall zum sicheren Vermeiden von Befall mit Schimmelpilzen von eingelagertem Trocknungsgut ist es erforderlich, das Trocknungsgut vor der Einlagerung zu trocknen. Hierzu sind aus dem Stand der Technik verschiedene Möglichkeiten bekannt. Eine Möglichkeit ist, das Trocknungsgut zu trocken, indem es auf einem Lüftungsboden ausgebreitet wird, wobei durch den Lüftungsboden Luft in das zu trocknende Trocknungsgut gelangt. Eine weitere Möglichkeit ist, Heutrocknungssysteme zu verwenden, welche auch in Rundballen gepresstes Heu trocknen können.

Heutrocknungssysteme wie sie z.B. aus der AT 005 600 U1 oder der EP 0 534 382 A1 bekannt sind können Heuballen in zwei Ebenen trocknen, wobei ein unterer Heuballen von unten mit Luft versorgt wird. Weiterhin wird der untere Heuballen durch einen mittleren Ring mit Luft von oben versorgt. Der mittlere Ring bläst außerdem Luft von unten in einen oberen Heuballen, der auf dem Ring steht, ein. Die mittleren Ringe sind dabei an einem Gestell angeordnet, welches fest in einer Halle eingebaut ist.

Nachteilig an dem beschriebenen Stand der Technik ist, dass die Systeme kompliziert aufgebaut sind und viel Platz benötigen, auch wenn sie nicht zum Heutrocknen verwendet werden.

Aufgabe der Erfindung ist es, bekannte Systeme zur Trocknung von landwirtschaftlichem Trocknungsgut zu verbessern.

Die Aufgabe wird mit einer Trocknungsvorrichtung nach Anspruch 1 gelöst. Erfindungsgemäße Trocknungsvorrichtungen haben den Vorteil, dass sie flexibel montiert und demontiert werden können. So kann eine Halle, welche mit einer erfindungsgemäßen Trocknungsvorrichtung ausgestattet ist, auch für andere Zwecke eingesetzt werden, wenn kein Heu getrocknet wird.

Bevorzugte Trocknungsvorrichtungen weisen ein Luftzuführungssystem zur Zuführung von Luft zu einer Mehrzahl von Trocknungsgutballen auf. Das Luftzuführungssystem kann erfindungsgemäß eine fest in einem Boden eingebaute Verteileinrichtung umfassen, an welche ein fest im Boden eingebautes Bodenausblasende zur Zuführung von Luft zu einem auf dem Bodenausblasende angeordneten unteren Trocknungsgutballen angeschlossen ist. Der Boden kann ein Hallenboden oder auch ein Boden im Freien sein. Alternativ ist es möglich, das Luftzuführsystem als starren Kanal, z.B. aus Bleich, auf den Boden zu montieren und auch das Bodenausblasende auf dem Boden zu befestigen.

Das Bodenausblasende ist vorzugsweise als kreisförmige Öffnung ausgebildet. Weiterhin umfasst die Trocknungsvorrichtung vorteilhafterweise ein Mittenausblasende zur Anordnung auf dem unteren Trocknungsgutballen und unter einem oberen Trocknungsgutballen, wobei zur Vereinfachung der Ausdrucksweise Trocknungsgutballen im Folgenden als Heuballen bezeichnet werden, ohne dass damit eine Einschränkung auf Heu zu sehen wäre. Das Mittenausblasende ist an die Verteileinrichtung angeschlossen, um es mit Luft zum Trocknen der Heuballen zu versorgen. Am stromaufwärts gelegenen Ende der Verteileinrichtung ist vorzugsweise ein Gebläse des Luftzuführungssystems angeordnet.

Erfindungsgemäß ist das Mittenausblasende mittels eines Schlauches an der Verteileinrichtung angeschlossen. Dies bietet den Vorteil, dass das Mittenausblasende leicht demontiert werden kann. Der Schlauch ist vorzugsweise biegeschlaff oder flexibel. Dies ermöglicht eine flexible Montage.

Bei typischen Ausführungsformen der Erfindung umfasst die Verteileinrichtung einen zweckmäßigerweise im Boden eingebauten und/oder am starren Kanal angebauten Schlauchanschluss, an welchem der Schlauch durch mechanisch betätigbare Verbindungsmittel zum Anschließen und Lösen lösbar angeschlossen ist. Dies ermöglicht eine schnelle Montage des Schlauches. Vorteilhafterweise ist der Schlauchanschluss fest im Boden eingebaut. Die Verteileinrichtung ist so immer schnell einsetzbar.

Das Mittenausblasende umfasst vorzugsweise einen Verteilerring. Der Verteilerring ist vorzugsweise aus Metall, insbesondere als Stahlring ausgebildet. Der Durchmesser beträgt vorzugsweise mindestens 0,5 m oder höchstens 1,5 m, die Höhe beträgt vorteilhafterweise mindestens 5 cm, bevorzugter mindestens 8 cm, höchstens 25 cm, insbesondere höchstens 20 cm. Der Verteilerring umfasst eine radial ausgerichtete Öffnung zum Anschluss des Schlauches, wobei sich die Radialrichtung auf den im Betrieb auf den unteren Heuballen aufgelegten Zustand des Verteilerrings bezieht. Vorzugsweise ist die Verbindung zwischen dem Verteilerring und dem Schlauch lösbar, um eine platzsparende Lagerung der Einzelteile zu ermöglichen. Auch kann der Verteilerring ohne Demontage vom Schlauch aufgehängt werden, z.B. an einer Wand, so dass ein sehr schnelles Verräumen der Trocknungsvorrichtung ermöglicht wird.

Weiter ist es vorteilhaft, wenn der Verteilerring des Mittenausblasendes zu beiden Seiten einen formfesten und eine Luftdichtung zwischen Verteilerring und Rundballen bewirkenden Kragen aufweist, der sich in einen Rundballen einpresst und ein zumindest 5 cm langes Rohr in den Rundballen hineinformt. Einem unerwünschten Entweichen von Luft frühzeitig aus dem Heuballen kann entgegengewirkt werden, sodass der Trocknungsvorgang effektiv bleibt.

Das Einpressen des Kragens in den Heuballen geschieht, wenn der Rundballen auf den Kragen aufgelegt wird durch das Eigengewicht des Rundballen bzw. durch das Gewicht eines Rundballen, der den Verteilerring nach unten in einen darunter liegenden Rundballen eindrückt. Durch das zumindest 5 cm lange Rohr kann die eingeblasene Luft ein Stück weit in den Rundballen hineingeführt werden.

Vorteilhafterweise ist das Mittenausblasende dazu vorgesehen, frei zwischen dem oberen und dem unteren Heuballen angeordnet zu werden. Der Ausdruck "frei" bedeutet dabei vorzugsweise, dass keine Abstützung oder Stütze zwischen dem oberen und dem unteren Heuballen vorgesehen ist Der obere und der untere Heuballen sind vorzugsweise freitragend aufeinander gestapelt, getrennt durch den Verteilerring der Mittenausblasende. So wird ein einfacher Aufbau erreicht, ohne dass fest installierte Hilfsmittel wie Stützen oder Abstützungen zwingend erforderlich sind. Bei weiteren Ausführungsformen der Erfindung können auch Stützen vorgesehen werden, um einen sicheren Stand der Heuballen zu gewährleisten.

Typische Ausführungsformen der Erfindung umfassen einen Bodendeckel, welcher auf das Bodenausblasende aufsetzbar ist. Dies bietet den Vorteil, dass der Boden oder eine auch anderweitig verwendbar sind, falls kein Heu getrocknet wird. Weiterhin umfassen bevorzugte Ausführungsformen der Erfindung einen Schlauchanschlussdeckel, welcher geeignet ist, den Schlauchanschluss abzudecken. Auf diese Weise wird der Boden vielfältig verwendbar, wobei gleichzeitig eine schnelle Montage der kompletten Trocknungsvorrichtung möglich ist.

Vorzugsweise ist der Bodendeckel befahrbar, vorteilhafterweise auch durch einen Lastkraftwagen mit 40 t zulässigem Gesamtgewicht. Dadurch wird eine universelle Nutzung des Bodens gewährleistet. Dies gilt typischerweise analog für einen Schlauchanschlussdeckel. Vorzugsweise ist der Bodendeckel oder auch der Schlauchanschlussdeckel mit mindestens 1 t Radlast, bevorzugter mindestens 2 t oder 3 t Radlast befahrbar. Dies bietet den Vorteil, dass auch ein Befahren mit schwereren Fahrzeugen möglich ist.

Bevorzugte Trocknungsvorrichtungen umfassen einen Abschlussdeckel, welcher dazu vorgesehen ist, auf dem oberen Heuballen angeordnet zu werden. Der Abschlussdeckel ist typischerweise geeignet, einen Abschluss auf dem oberen Heuballen zu bilden, um zu erreichen, dass ein Großteil der in den oberen Heuballen durch das Mittenausblasende eingeleiteten Luft durch den Heuballen geleitet wird und nicht oben aus dem Heuballen austritt. Besonders geeignet ist die Erfindung für Heuballen, welche wie eine Rolle ausgebildet sind, wobei in der Mitte ein Raum geringerer Pressung verbleibt, in welchen die Luft eingeleitet wird.

Vorzugsweise ist der Schlauch in der Länge einfaltbar oder ist ein mit Kunststoff beschichteter Gewebeschlauch. Bei weiteren typischen Ausführungsformen weist der Schlauch eine Ringverstärkung auf, damit der Schlauch nicht einfällt und bei einem Knicken einen zu großen Querschnittsverlust erfährt. Der Schlauch besteht vorteilhafterweise ausschließlich aus einem oder mehreren in der Länge einfaltbaren Einzelschläuchen, die sich im eingefalteten Zustand bei Einblasen von Luft entfalten. Ein Schlauch ist zweckmäßigerweise in der Weise flexibel, dass er in der Länge einfaltbar bzw. zusammenschiebbar ist, insbesondere auf unter 20% seiner ausgezogenen Länge. Das die Hülle bildende Material des Schlauchs ist ohne Materialschaden und insbesondere ohne eine Materialdehnung faltbar. Es kann ein flexibles, planenartiges Material sein. Der Schlauch ist im Volumen aufblasbar, ist also bei einem Aufblasen durch Formänderung und ohne Materialdehnung vergrößerbar. Die Heuballen können Ballen in jeder Form sein und beinhalten gepresstes Heu. Zweckmäßigerweise sind die Heuballen Rundballen mit einem Durchmesser von zumindest 1,1 m und einer flach liegenden Höhe von zumindest 0,8 m.

Der Schlauch kann aus einem Planenmaterial aus einem Kunststoff gefertigt sein, wobei das Planenmaterial ein durchgehendes und einheitliches Material ist. Vorteilhafterweise umfasst der Schlauch jedoch einen mit Kunststoff beschichteten Gewebeschlauch. Das eine Stabilität und Reißfestigkeit bildende Material des Schlauchs ist somit aus einem Gewebe oder Geflecht gebildet, das mit einem Kunststoff zumindest einseitig beschichtet ist, sodass eine Luftundurchlässigkeit vorliegt.

Um ein Einfallen des Schlauchs und ein unerwünschtes Abknicken zu verhindern, ist der Schlauch zweckmäßigerweise mit einer Ringkonstruktion versehen, die seinen Querschnitt vielfach umläuft und ihn gegen ein Einfallen in seinen Querschnitt hinein schützt. Durch die Ringkonstruktion wird der Querschnitt der Hülle bei gestrecktem Schlauch offen gehalten. Die Ringkonstruktion kann eine Konstruktion aus vielen einzelnen Ringen sein, die in ihrer Gesamtheit den Querschnitt vielfach umlaufen. Zweckmäßigerweise ist die Ringkonstruktion eine Spiral- bzw. Wendelkonstruktion mit einer Spirale bzw. Wendel, die den Querschnitt des Schlauchs vielfach und spiralartig umläuft. Die Ringe oder die Spirale kann aus Metall bestehen, wobei eben so gut ein Material aus Kohlefaser denkbar ist.

Vorteilhafterweise ist die Ringkonstruktion nach außen hin durch ein Scheuerschutzmittel umgeben, das streifenförmig den

Schlauch im Bereich der Ringkonstruktion umläuft und zweckmäßigerweise ein radial am weitesten außen liegendes Segment des Schlauchs nach außen abdeckt. Auf diese Weise ist der Schlauch bei einem Aufliegen auf einem Boden durch das Scheuerschutzmittel gegen ein Abscheuern geschützt, sodass eine hohe Stabilität gegen eine Beschädigung bei einem Hin- und Herrutschen auf beispielsweise einem Pflasterboden gewährleistet ist.

Das Scheuerschutzmittel ist zweckmäßigerweise dergestalt ausgeführt, dass der Schlauch in einem gestreckten Zustand ausschließlich auf dem Scheuerschutzmittel auf dem Boden aufliegt, insbesondere auch bei einem Abrollen des Schlauchs um 360° um seine Längsachse. Vorteilhafterweise bedeckt das Scheuerschutzmittel maximal 20% der Außenfläche des Schlauchs, sodass die übliche Fläche aus Materialeinsparungsgründen frei bleiben kann.

Bei vorteilhaften Ausführungsformen der Erfindung umfasst die Verteileinrichtung eine Mehrzahl von Bodenausblasenden und Schlauchanschlüssen, um eine Mehrzahl von unteren Heuballen und oberen Heuballen zu trocknen. Weiterhin umfasst die Trocknungsvorrichtung vorzugsweise eine Mehrzahl von Schläuchen und Mittenausblasenden. Bei bevorzugten Verwendungen der Erfindung werden jeweils Stapel aus einem unteren Heuballen, einem Mittenausblasende, einem oberen Heuballen und einem Abschlussdeckel gebildet. Die Verteileinrichtung versorgt die verschiedenen Mittenausblasenden über die Schlauchanschlüsse und Schläuche mit Luft zum Trocknen der Heuballen.

Vorzugweise umfasst der Boden Beton, ist betoniert oder ist im wesentlichen aus Beton hergestellt. Dabei bedeutet "im wesentlichen, dass der Boden weitere Bauelemente, wie Betonstahl oder verlorene Schalungen umfassen kann. Eine verlorene Schalung ist besonders im Hinblick auf die Verteileinrichtung vorteilhaft. So ist bei bevorzugten Ausführungsformen der Erfindung die Verteileinrichtung in dem Boden zumindest teilweise einbetoniert. Um die Freiräume für die Kanäle zur Luftdurchführung zu schaffen, wird vorzugsweise verlorene Schalung eingesetzt, welche im Boden nach dem Betonieren verbleibt. Zweckmäßigerweise ist die Verteileinrichtung mit einer Wärmeisolierung versehen. Bei einem auf den Boden montierten starren Haupt- bzw. Verteilkanal ist dieser zweckmäßigerweise mit innen liegenden Isolierplatten versehen.

Typischerweise umfasst das Verteilsystem einen Hauptkanal. Der Hauptkanal ist vorzugsweise mit den Bodenauslassenden und den Schlauchanschlüssen verbunden. Weiterhin ist der Hauptkanal mit dem Gebläse verbunden, so dass der Hauptkanal die Verteilung der Luft sicherstellt. Der Hauptkanal kann zumindest teilweise in den Boden einbetoniert sein. Dies bietet den Vorteil, dass er geschützt ist. Bei auf dem Boden montierter Bauweise umfasst der Hauptkanal zweckmäßigerweise mehrere Kanalelemente, welche eine flexible Montage ermöglichen. Die Kanalelemente sind vorzugsweise aus Blech gefertigt. Dies bietet den Vorteil, dass die Trocknungsvorrichtung an verschiedenen Stellen montiert werden kann und transportabel ist.

Weiterhin kann ein Bodendeckel zum Abdecken eines Bodenausblasendes vorgesehen sein, wobei der Bodendeckel befahrbar ist und für eine Trocknungsvorrichtung in einer der oben beschriebenen Ausführungen oder mit den beschriebenen bevorzugten Merkmalen geeignet ist. Ein solcher Bodendeckel bietet den Vorteil, einen Boden für eine anderweitige Nutzung bereitzustellen. Der Bodendeckel ist vorzugsweise mit einem oder mehreren der oben in Bezug auf den Bodendeckel beschrieben Merkmale versehen.

Außerdem ist ein Verfahren zum Trocken von landwirtschaftlichen Trocknungsgutballen, insbesondere Heuballen, beschrieben bei dem ein Trocknungsgutballen auf ein Bodenausblasende einer Trocknungsvorrichtung gestellt wird, das an eine fest an einem Boden befestigte Verteileinrichtung angeschlossen ist, ein Mittenausblasende auf den unteren Trocknungsgutballen aufgelegt wird, ein oberer Trocknungsgutballen auf das Mittenausblasende gelegt wird und Luft durch die Verteileinrichtung, das Bodenausblasende, das Mittenausblasende und beide Trocknungsgutballen geblasen wird. Erfindungsgemäß wird das Mittenausblasende mittels eines Schlauches an der Verteileinrichtung angeschlossen und das Mittenausblasende im an die Verteileinrichtung angeschlossenen Zustand vom Boden gehoben und auf den unteren Trocknungsgutballen aufgelegt.

Vorteilhafterweise wird das Mittenausblasende im an den Schlauch angeschlossenen Zustand vom unteren Trocknungsgutballen entfernt und an einer Aufhängvorrichtung, insbesondere einer Wand, aufgehängt.

Außerdem kann ein das Bodenausblasende verschließender Bodendeckel vom Bodenausblasende abgenommen, der Schlauch an die Verteileinrichtung angeschlossen und der Bodendeckel auf den oberen Trocknungsgutballen als Abschlussdeckel zur Minderung eines vertikal durch den Trocknungsgutballen strömenden Luftstroms aufgelegt werden.

Die Erfindung wird nachfolgend anhand von Ausführungsbeispielen näher erläutert, die in den Zeichnungen dargestellt sind.

Es zeigen:
- Fig. 1: Teile einer erfindungsgemäße Trocknungsvorrichtung in einer schematischen Draufsicht,

- Fig. 2: die Trocknungsvorrichtung der Fig.1 in einer schematischen Seitenansicht und
- Fig. 3: eine Einzelheit der Trocknungsvorrichtung genauer in einer schematischen Ansicht.

### Genaue Beschreibung der Zeichnungen

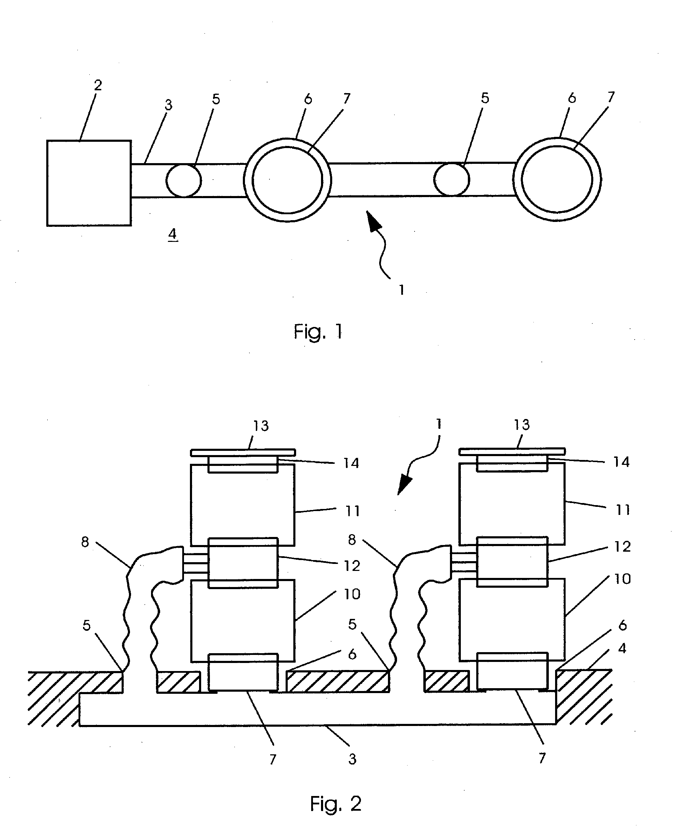

In der Figur 1 sind schematisch Teile einer Trocknungsvorrichtung 1 dargestellt, welche zum Trocknen von Heuballen eingesetzt werden kann. Die Trocknungsvorrichtung 1 umfasst ein Gebläse 2, welches Luft zum Trocknen des Heus ansaugt. Die Luft wird in einen Hauptkanal 3 einer Verteileinrichtung eingeblasen. In diesem Ausführungsbeispiel ist der Hauptkanal 3 ein in einem Boden 4 einer Halle (in Figur 1 nicht dargestellt) einbetonierter Kanal. Der Hauptkanal 3 ist strichliert dargestellt, da er unterhalb der Oberfläche des Bodens 4 liegt. Es ist jedoch eben so gut möglich, den Hauptkanal oberirdisch zu führen, z.B. in Form eines Blechkanals.

In dem Boden 4 sind verschiedene Öffnungen angeordnet, welche mit dem Hauptkanal 3 in Verbindung stehen. So sind in dem Boden 4 Schlauchanschlüsse 5 der Verteileinrichtung vorgesehen, an denen jeweils ein Schlauch (in Figur 1 nicht dargestellt) anschließbar ist. Weiterhin sind Bodenausblasenden 6 in dem Boden 4 angeordnet, die ebenfalls über den Hauptkanal 3 mit Luft versorgt werden. Die Bodenausblasenden 6 sind jeweils mit einem Kragen 7 versehen, welche in die kreisförmigen Bodenausblasenden 6 eingelassen oder fest in den Boden 3 einbetoniert sind. Die Kragen 7 dienen dazu, die Luft von unten in einen unteren Heuballen (in Figur 1 nicht dargestellt) einzuleiten und zu verhindern, dass die Luft unterhalb des unteren Heuballens entweicht. Die Kragen 7 sind entfernbar in den Bodenausblasenden 6 eingebaut oder fest in den Boden 3 einbetoniert.

Bei typischen Ausführungen der Erfindung sind eine Mehrzahl von Bodenausblasenden und Schlauchanschlüssen 5 vorgesehen. Dabei sind auch Ausführungen mit mehr als zwei, mehr als sechs oder noch mehr Bodenausblasenden und Schlauchanschlüssen 5 möglich und vorteilhaft. Bei mehreren Öffnungen lassen sich mehrere Stapel von Heuballen gleichzeitig trocknen. Vorzugsweise werden nicht benötigte Öffnungen, falls weniger als die maximal mögliche Anzahl von Heuballen getrocknet werden sollen, mit entsprechenden Abdeckungen wie Bodendeckeln oder Schlauchanschlussdeckeln abgedeckt. Daneben sind auch Trocknungsvorrichtungen mit nur jeweils einem Bodenausblasende und einem Schlauchanschluss 5 möglich.

Bei der Beschreibung der weiteren Figuren werden die gleichen Bezugszeichen für gleiche oder ähnliche Teile verwendet. Diese Teile oder Merkmale werden unter Umständen aus Gründen der Übersichtlichkeit nicht noch einmal bei jeder der Figurenbeschreibungen beschrieben.

In der Figur 2 ist die Trocknungsvorrichtung 1 der Figur 1 in einer geschnittenen Seitenansicht schematisch gezeigt, wobei weitere Einzelheiten der Trocknungsvorrichtung 1 dargestellt sind. Die Schnittebene der Figur 2 verläuft in der Figur 1 in der Mitte des Hauptkanals 3 durch die Schlauchanschlüsse 5 und die Bodenausblasenden 6. Die Schnittebene der Figur 1 verläuft in der Figur 2 auf der Oberfläche des Bodens 4.

In der Figur 2 sind die an die Schlauchanschlüsse 5 angeschlossenen Schläuche 8 gezeigt. Die Schläuche 8 sind aus einem planenartigen, flexiblen und faltbaren Material gefertigt. Das planenartige Material ist ohne Materialdehnung durch ein Einblasen von Luft - oder natürlich auch manuell durch ein in die Länge Ziehen eines Schlauchs 8 - entfaltbar und so vergrößerbar. Das Material ist ein Gewebe, das beidseitig mit Kunststoff überzogen oder in Kunststoff getränkt wurde, zum Beispiel ein Polyamidgewebe, das mit PVC beschichtet ist. Durch die planenartige Gestalt sind die Schläuche 8 in ihrer Länge variabel, einfaltbar, flexibel und in Radien führbar.

Um ein Einfallen der Schläuche zu verhindern, ist um jeden Schlauch 8 eine Ringkonstruktion gelegt, die aus einer Vielzahl von Ringen besteht. Alternativ kann die Ringkonstruktion einen Wendelring enthalten, wobei jeweils ein Wendelring oder einen Schlauch wendelförmig umläuft. Mit Hilfe der Spiralkonstruktion mit dem Wendelring kann ein Abknicken des Schlauchs verhindert werden, so dass einem Luftstau durch Knicken des Schlauchs 8 entgegengewirkt wird.

Weiterhin sind in der Figur 2 untere Heuballen 10 und obere Heuballen 11 gezeigt. Die unteren Heuballen 10 stehen jeweils auf einem der Kragen 7 auf. Die Kragen 7 verhindern, dass Luft seitlich unter den unteren Heuballen 10 entweichen kann. Auf den unteren Heuballen 10 sind jeweils Verteilerringe 12 angeordnet, welche von oben in die unteren Heuballen 10 eingepresst sind. Jeder der Verteilerringe 12 bildet jeweils ein Mittenausblasende für das Einbringen von Luft sowohl in den unteren Heuballen 10 als auch in den oberen Heuballen 11. Durch das Einpressen der Verteilerringe 12 in die Heuballen wird wiederum erreicht, dass kaum Luft zwischen den Heuballen 10, 11 entweichen kann. Damit wird sichergestellt, dass der größte Teil der in die Heuballen 10, 11 eingebrachte Luft radial durch das Heu der Heuballen 10, 11 entweichen muss.

Der Verteilerring 12 reicht vorzugsweise jeweils zwischen 5 cm und 15 cm in den unteren Heuballen 10 und den oberen Heuballen 11 hinein um einen aerodynamischen Kurzschluss, d.h. ein unbeabsichtigtes Entweichen von Luft unter oder über dem jeweiligen Heuballen 10 oder 11, zu verhindern. Der obere Heuballen 11 wird auf den Verteilerring 12 gestellt. Bereits durch das Gewicht des oberen Heuballens 11 wird die jeweilige Einpresstiefe des Verteilerrings in die Heuballen 10 und 11 erreicht. Zusätzlich kann ein Andrücken vorgesehen werden, um die Einpresstiefe zu erreichen.

Die Verteilerringe 12 sind jeweils über einen Stutzen mit Wulst und demontierbarer Abziehsicherung mit einem der Schläuche 8 verbunden, um Luft von dem Hauptkanal 3 in das Innere der Heuballen 10 und 11 zu leiten. Durch die Schläuche 8 mit den Verteilerringen 12 wird eine flexible Montage erreicht. Auch die Schlauchanschlüsse 5 können mit einem Wulst versehen sein, um ein Abrutschen des Schlauchs 8 zu verhindern. Der Schlauch ist hierbei zweckmäßigerweise mit jeweils einem Gurt am Schlauchanschluss 5 und am Stutzen des Verteilerrings 12 gesichert, der den Schlauch 8 auf den Schlauchanschluss 5 bzw. den Stutzen presst und ein Herüberziehen des Schlauchs 8 über den Wulst verhindert.

Durch die flexible Verbindung eines Verteilerrings 12 mit der Verteileinrichtung bzw. deren Hauptkanal 3 kann der Verteilerring 12 einfach und mit der Hand auf einen Heuballen aufgelegt und dort an eine geeignete Stelle, zweckmäßigerweise zentriert, positioniert werden. Es kann vorkommen, dass ein Heuballen schief gewickelt ist, also nach oben hin parallelogrammartig verschoben ist. Das Wickelzentrum des Heuballens ist dann nicht senkrecht, sondern schräg ausgerichtet. Infolgedessen ist es sinnvoll, den Verteilerring 12 nicht genau senkrecht über einem Schlauchanschluss 5 zu platzieren, sondern eben gerade im Zentrum der oberen Oberfläche des Heuballens, das nicht genau über dem Schlauchanschluss 5 liegt. Wird ein Verteilerring demgegenüber maschinell auf einen Heuballen gelegt, so wird er genau über dem Schlauchanschluss 5 zu liegen kommen, so dass der Heuballen von oben ungleichmäßig belüftet wird oder sogar ein aerodynamischer Kurzschluss entsteht. Durch den einfaltbaren Schlauch kann der Verteilerring 12 manuell und im Radius des Schlauchs frei beweglich an geeigneter Stelle platziert werden, so dass eine optimale Belüftung des Heuballens erreicht wird.

Ein weiterer Vorteil gegenüber bekannten Heutrocknungsanlagen besteht darin, dass zusätzlich zur freien horizontalen Platzierbarkeit auch die Platzierungshöhe aller Verteilerringe 12 innerhalb des Radius des entsprechenden Schlauchs frei wählbar ist. Auf diese Weise können auch unterschiedlich dicke bzw. hohe Ballen optimal belüftet werden. Demgegenüber kann es bei einer starren Luftführung sein, dass alle Verteilerringe in der gleichen Höhe platziert werden müssen, so dass es bei einem dünneren bzw. niedrigeren Ballen zu einem aerodynamischen Kurzschluss kommt.

Oben auf den oberen Heuballen 11 können jeweils Abschlussdeckel 13 vorgesehen sein, welche jeweils einen angeschweißten Ringflansch 14 aufweisen. Der Ringflansch 14 wird wie der Verteilerring 12 in das Heu eingepresst. Der Ringflansch 14 wird von oben in den oberen Heuballen 11 eingepresst, um ein Entweichen von Luft nach oben aus dem oberen Heuballen 11 heraus zu verhindern. Anstelle eines Abschlussdeckels 13 kann der Bodendeckel 15 verwendet werden.

Ein weiterer Vorteil besteht somit in der freien Wahl der Belegung der Ballenplätze. Es müssen nicht eine bestimmte Anzahl von Ballen übereinander oder nebeneinander belüftet werden, sondern es können bis zu einer Maximalzahl beliebig viele Ballen in einer beliebigen Anordnung belüftet werden, da nicht benutzte Öffnungen und/oder Ballenoberseiten mit einem Abschlussdeckel 13 oder Bodendeckel 15 - wobei diese beiden Deckel 13, 15 zweckmäßigerweise identisch sind - abgedeckt werden können.

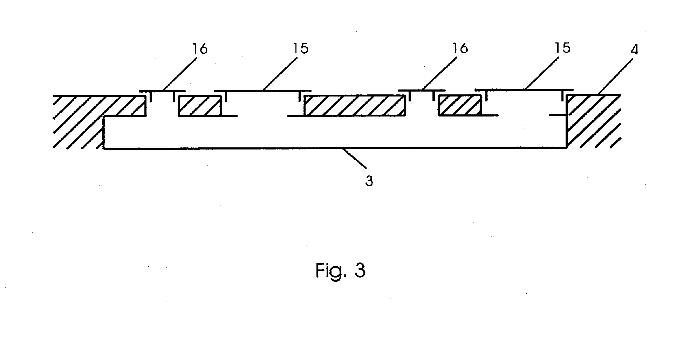

In der Figur 3 ist die Trocknungsvorrichtung 1 in demontiertem Zustand gezeigt. Die Figur 3 ist eine schematische seitliche Schnittansicht, welche durch dieselbe Schnittebene wie die Schnittansicht der Figur 2 verläuft. Nach Entfernen der Heuballen 10 und 11 sowie der Schläuche 8, der Verteilerringe 12, der Abschlussdeckel 13 und der Kragen 7 werden die Bodenausblasenden 6 mit Bodendeckeln 15 verschlossen. Die Schlauchanschlüsse 5 werden mit Schlauchanschlussdeckeln 16 verschlossen. Die Bodendeckel 15 und die Schlauchanschlussdeckel 16 sind für ein Befahren mit einem LKW mit einem zulässigen Gesamtgewicht von 40 t geeignet. Auf diese Weise kann der Boden 4 anderweitig genutzt werden. Die Verteilerringe 12 können mit ihren Schläuchen 8 verbunden bleiben und werden an einer Wand aufgehängt. Hierdurch ist die Trocknungsvorrichtung schnell verräumt und der Raum anderweitig nutzbar.

Die Erfindung ist nicht auf das vorstehend beschriebene Ausführungsbeispiel beschränkt. Der Umfang wird vielmehr durch den Umfang der Ansprüche bestimmt.

### Bezugszeichenliste

- 1: Trocknungsvorrichtung
- 2: Gebläse
- 3: Hauptkanal
- 4: Boden
- 5: Schlauchanschluss
- 6: Bodenausblasende
- 7: Kragen
- 8: Schlauch
- 10: unterer Heuballen
- 11: oberer Heuballen
- 12: Verteilerring
- 13: Abschlussdeckel
- 14: Ringflansch
- 15: Bodendeckel
- 16: Schlauchanschlussdeckel

## Patentansprüche

1. Trocknungsvorrichtung (1) zum Trocknen von landwirtschaftlichen Trocknungsgutballen mit einem Luftzuführungssystem zur Zuführung von Luft zu einer Mehrzahl von Trocknungsgutballen (10, 11), das eine starre, fest an einem Boden. (4) befestigte Verteileinrichtung umfasst, an welche mindestens ein Bodenausblasende (6) zur Zuführung von Luft zu einem auf dem Bodenausblasende (6) angeordneten unteren Trocknungsgutballen (10) und mindestens ein Mittenausblasende zur Anordnung auf dem unteren Trocknungsgutballen (10) und unter einem oberen Trocknungsgutballen (11) angeschlossen ist,
**dadurch gekennzeichnet, dass** das jeweils einem Bodenausblasende (6) zugeordnete Mittenausblasende mittels eines Schlauches (8) an der Verteileinrichtung angeschlossen ist zum Versorgen des Mittenausblasendes von der Verteileinrichtung über den Schlauch (8) mit Luft zum Trocknen der Trocknungsgutballen (11).

2. Trocknungsvorrichtung (1) nach Anspruch 1, **dadurch gekennzeichnet, dass** die Verteileinrichtung einen in dem Boden (4) eingebauten Schlauchanschluss (5) umfasst, an welchem der Schlauch (8) lösbar angeschlossen ist.

3. Trocknungsvorrichtung (1) nach Anspruch 1 oder 2, **dadurch gekennzeichnet, dass** das Mittenausblasende einen Verteilerring (12) umfasst, welcher lösbar an dem Schlauch (8) angeschlossen ist.

4. Trocknungsvorrichtung (1) nach einem der vorhergehenden Ansprüche, **dadurch gekennzeichnet, dass** das Mittenausblasende dazu vorgesehen ist, frei zwischen dem oberen Trocknungsgutballen (11) und dem unteren Trocknungsgutballen (10) angeordnet zu werden.

5. Trocknungsvorrichtung (1) nach einem der vorhergehenden Ansprüche, **gekennzeichnet durch** einen Bodendeckel (15), welcher auf das Bodenausblasende (6) oder einen Kragen (7) aufsetzbar ist.

6. Trocknungsvorrichtung (1) nach Anspruch 5, **dadurch gekennzeichnet, dass** der Bodendeckel (15) befahrbar ist.

7. Trocknungsvorrichtung (1) nach einem der vorhergehenden Ansprüche, **gekennzeichnet durch** einen Abschlussdeckel (13), welcher dazu vorgesehen ist, auf dem oberen Trocknungsgutballen (11) oder bei dessen Fehlen auf dem unteren Trocknungsgutballen (10) angeordnet zu werden.

8. Trocknungsvorrichtung (1) nach einem der vorhergehenden Ansprüche, **dadurch gekennzeichnet, dass** der Schlauch (8) in der Länge einfaltbar ist.

9. Trocknungsvorrichtung (1) nach einem der vorhergehenden Ansprüche, **dadurch gekennzeichnet, dass** der Schlauch (8) ein mit Kunststoff beschichteter Gewebeschlauch ist.

10. Trocknungsvorrichtung (1) nach einem der vorhergehenden Ansprüche, **dadurch gekennzeichnet, dass** der Schlauch (8) eine Ringverstärkung aufweist.

11. Trocknungsvorrichtung (1) nach einem der vorhergehenden Ansprüche, **dadurch gekennzeichnet, dass** die Verteileinrichtung eine Mehrzahl von Bodenausblasenden (6) und Schlauchanschlüssen (5) umfasst, um eine Mehrzahl von unteren Trocknungsgutballen (10) und oberen Trocknungsgutballen (11) zu trocknen.

12. Trocknungsvorrichtung (1) nach einem der vorhergehenden Ansprüche, **dadurch gekennzeichnet, dass** das Verteilsystem einen Hauptkanal (3) umfasst, welcher zumindest teilweise in den Boden (4) einbetoniert ist.

13. Trocknungsvorrichtung (1) nach einem der vorhergehenden Ansprüche, **dadurch gekennzeichnet, dass** das Verteilsystem einen Hauptkanal (3) umfasst, welcher aus Kanalelementen zusammengesetzt ist.

14. Verfahren zum Trocknen von landwirtschaftlichen Trocknungsgutballen, bei dem Luft mittels eines Luftzuführungssystem zu einer Mehrzahl von Trocknungsgutballen (10, 11) geführt wird, wobei das Luftzuführungssystem eine starre, fest an einem Boden (4) befestigte Verteileinrichtung umfasst, und bei dem ein Mittenausblasende jeweils an ein Bodenausblasende (6) angeschlossen wird und Luft zu einem auf dem Bodenausblasende (6) angeordneten unteren Trocknungsgutballen (10) und durch das auf dem unteren Trocknungsgutballen (10) angeordnete Mittenausblasende in einem oberen Trocknungsgutballen (11) geblasen wird,
**dadurch gekennzeichnet, dass** das Mittenausblasende mittels eines Schlauches (8) an der Verteileinrichtung angeschlossen wird.

15. Verfahren nach Anspruch 14,
**dadurch gekennzeichnet, dass** das Mittenausblasende manuell zu dem unteren Trocknungsgutballen (11) hingeführt und manuell auf diesen aufgelegt wird.

## Claims

1. Drying device (1) for drying bales of agricultural products to be dried with an air supply system for supplying air to a multitude of bales of products to be dried (10, 11) which comprises a rigid distribution device, fixedly fixed on a bottom (4). on which at least one bottom discharge end (6) is connected for supplying air to a lower bale of products to be dried placed on the bottom discharge end (6) and at least one middle discharge end for placing on the lower bale of products to be dried and under an upper bale of products to be dried (11), **characterized in that** the middle discharge end respectively associated to a bottom discharge end (6) is connected to the distribution device by means of a hose (8) for supplying the middle discharge end of the distribution device with air for drying the bales of products to be dried (10) by the hose (8).

2. Drying device (1) according to claim 1, **characterized in that** the distribution device comprises a hose connection (5) integrated in the bottom (4) to which the hose (8) is detachable connected.

3. Drying device (1) according to claim 1 or 2, **characterized in that** the middle discharge end comprises a distribution ring (12) which is detachably connected to the hose (8).

4. Drying device (1) according to one of the preceding claims, **characterized in that** the middle discharge end is provided to be placed freely between the upper bale of products to be dried (11) and the lower bale of products to be dried (10).

5. Drying device (1) according to one of the preceding claims, **characterized by** a bottom cover (15), which can be set onto the bottom discharge end (6) or onto a collar (7).

6. Drying device (1) according to claim 5, **characterized in that** the bottom cover (15) can be driven over.

7. Drying device (1) according to one of the preceding claims, **characterized by** a closing cover (13) which is provided to be placed on the upper bale of products to be dried (11) or, in absence thereof, on the lower bale of products to be dried (10).

8. Drying device (1) according to one of the preceding claims, **characterized in that** the hose (8) can be folded-in lengthwise.

9. Drying device (1) according to one of the preceding claims, **characterized in that** the hose (8) is a fabric hose coated with plastics.

10. Drying device (1) according to one of the preceding claims, **characterized in that** the hose (8) has ring reinforcement.

11. Drying device (1) according to one of the preceding claims, **characterized in that** the distribution device comprises a multitude of bottom discharge ends (6) and hose connections (5) to dry a multitude of lower bales of products to be dried (10) and of upper bales of products to be dried (11).

12. Drying device (1) according to one of the preceding claims, **characterized in that** the distribution system comprises a main channel (3), which is at least partially encased in concrete in the bottom (4).

13. Drying device (1) according to one of the preceding claims, **characterized in that** the distribution system comprises a main channel (3), which is composed of channel elements.

14. Method for drying bales of agricultural products to be dried for which air is guided to a multitude of bales of products to be dried (10, 11) by means of an air supply system, whereby the air supply system comprises a rigid distribution device fixedly fixed to a bottom (4) and for which a middle discharge end is respectively connect to a bottom discharge end (6) and air is blown to a lower bale of products to be dried (10) placed on the bottom discharge end (6) and in an upper bale of products to be dried through the middle discharge end placed on the lower bale of products to be dried (10), **characterized in that** the middle discharge end is connected to the distribution device by means of a hose (8).

15. Method according to claim 14, **characterized in that** the middle discharge end is guided manually to the lower bale of products to be dried (11) and is manually laid onto this bale.

## Revendications

1. Dispositif de séchage (1) pour sécher des bottes de matières à sécher agricoles avec un système d'amenée d'air pour amener de l'air à une multitude de bottes de matières à sécher (10, 11) qui comprend un dispositif de distribution rigide, fixé de manière fixe à un fond (4), sur lequel au moins une extrémité de soufflage de fond (6) est raccordée pour l'amenée d'air à une botte inférieure de matières à sécher (10) placée sur l'extrémité de soufflage de fond (6) et une extrémité de soufflage de milieu pour le placement sur la botte inférieure de matières à sécher (10) et sous une botte supérieure de matières à sécher (11), **caractérisé en ce que** l'extrémité de soufflage de milieu, associée respectivement à une extrémité de soufflage de fond (6), est raccordée au moyen d'un tuyau (8) au dispositif de distribution pour alimenter en air l'extrémité de soufflage de milieu du dispositif de distribution par le tuyau (8) pour sécher les bottes de matières à sécher (10).

2. Dispositif de séchage (1) selon la revendication 1, **caractérisé en ce que** le dispositif de distribution comprend un raccord de tuyau (5), intégré dans le fond (4), auquel le tuyau (8) est branché de manière amovible.

3. Dispositif de séchage (1) selon la revendication 1 ou 2, **caractérisé en ce que** l'extrémité de soufflage de milieu comprend un anneau de distribution (12) qui est raccordé de manière amovible au tuyau (8).

4. Dispositif de séchage (1) selon l'une des revendications précédentes, **caractérisé en ce que** l'extrémité de soufflage de milieu est prévue pour être placée librement entre la botte supérieure de matières à sécher (11) et la botte inférieure de matières à sécher (10).

5. Dispositif de séchage (1) selon l'une des revendications précédentes, **caractérisé par** un couvercle de fond (15) qui peut être posé sur l'extrémité de soufflage de fond (6) ou sur une collerette (7)

6. Dispositif de séchage (1) selon la revendication 5, **caractérisé en ce que** le couvercle de fond (15) est praticable.

7. Dispositif de séchage (1) selon l'une des revendications précédentes, **caractérisé par** un couvercle de fond (15) qui est prévu pour être placé sur la botte supérieure de matières à sécher (11) ou, en cas d'absence de celle-ci, sur la botte inférieure de matières à sécher (10).

8. Dispositif de séchage (1) selon l'une des revendications précédentes, **caractérisé en ce que** le tuyau (8) peut être plié dans la longueur.

9. Dispositif de séchage (1) selon l'une des revendications précédentes, **caractérisé en ce que** le tuyau (8) est une gaine tissée revêtue de plastique.

10. Dispositif de séchage (1) selon l'une des revendications précédentes, **caractérisé en ce que** le tuyau (8) présente un anneau de renforcement.

11. Dispositif de séchage (1) selon l'une des revendications précédentes, **caractérisé en ce que** le dispositif de distribution présente une multitude d'extrémités de soufflage de fond (6) et des raccords de tuyau (5) pour sécher une multitude de bottes inférieures de matières à sécher (10) et de bottes supérieures de matières à sécher (11).

12. Dispositif de séchage (1) selon l'une des revendications précédentes, **caractérisé en ce que** le système de distribution comprend un canal principal (3) qui est bétonné au moins partiellement dans le fond (4).

13. Dispositif de séchage (1) selon l'une des revendications précédentes, **caractérisé en ce que** le système de distribution comprend un canal principal (3) qui se compose d'éléments de canal.

14. Procédé pour sécher des bottes de matières à sécher agricoles pour lequel de l'air est guidé au moyen d'un système d'alimentation en air vers une multitude de bottes de matières à sécher (10, 11), le système d'alimentation en air comprenant un dispositif rigide de distribution, fixé de manière fixe à un fond (4) et pour lequel une extrémité de soufflage de milieu est raccordée respectivement à une extrémité de soufflage de fond (6) et de l'air est soufflé vers une botte intérieure de matières à sécher (10) placée sur l'extrémité de soufflage de fond (6) et par l'extrémité de soufflage du milieu placée sur la botte inférieure de matières à sécher (10) dans une botte supérieure de matières à sécher (11), **caractérisé en ce que** l'extrémité de soufflage de milieu est branchée au dispositif de distribution au moyen d'un tuyau (8).

15. Procédé selon la revendication 14, **caractérisé en ce que** l'extrémité de soufflage du milieu est guidée manuellement vers la botte inférieure de matières à sécher (11) et est posée manuellement sur celle-ci.
